# FASCICULE DE BREVET EUROPEEN

(11) **EP 2 276 663 B1**
(45) Date de publication et mention de la délivrance du brevet: **05.10.2011**
(21) Numéro de dépôt: 09738297.2
(22) Date de dépôt: 27.03.2009
(51) Int. Cl.: B64C 1/14

(54) **PORTE D'AERONEF AVEC DISPOSITIF DE FERMETURE**
FLUGZEUGTÜR MIT EINER VERSCHLUSSVORRICHTUNG
AIRCRAFT DOOR WITH LOCKING DEVICE

(30) Priorité: 22.04.2008 FR 0852711
(43) Date de publication de la demande: 26.01.2011
(73) Titulaire: AIRBUS OPERATIONS, 31060 Toulouse (FR)
(72) Inventeur: DEPEIGE, Alain, F-31170 Tournefeuille (FR)
(74) Mandataire: Le Tourneau, Augustin
(86) Numéro de dépôt international: PCT/FR2009/000349
(87) Numéro de publication internationale: WO 2009/133263

(56) Documents cités:
- DE-B- 1 105 725
- US-A- 2 885 039
- US-A1- 2007 007 390

## Description

La présente invention se rapporte à un dispositif de fermeture d'une porte d'aéronef, ainsi qu'à un aéronef intégrant un tel dispositif.

Pour la suite de la description, on entend par porte tous les dispositifs tels que battant, trappe ou analogue comprenant un panneau susceptible d'obturer une ouverture dans une paroi dans une première position et de la dégager dans une autre position quelles que soient les formes, les dimensions et la fonction. Une porte d'aéronef comprend donc, d'une part, un dormant lié au fuselage de l'aéronef, délimitant une ouverture, et, d'autre part, un battant articulé par rapport au dormant, susceptible d'occuper une première position dite fermée dans laquelle il obture l'ouverture et une autre position dans laquelle il dégage l'ouverture par un déplacement vers l'extérieur de l'aéronef. Différents moyens peuvent être prévus pour permettre l'articulation du battant par rapport au dormant, notamment ceux décrits dans le document FR-2 819 782. Ces moyens d'articulation sont tels qu'ils permettent à la surface extérieure du battant de l'aéronef d'affleurer à l'enveloppe extérieure du fuselage pour limiter les perturbations des écoulements d'air autour dudit fuselage lorsque le battant est en position fermée.

En complément, la porte d'aéronef comprend des moyens de fermeture pour maintenir le battant en position fermée.

La présente invention se rapporte plus précisément à la famille de portes d'aéronef, dite "portes bouchon". Ces portes prévoient des moyens de fermeture de telle sorte qu'en position fermée, le battant de la porte est en appui, au moyen de butées et sous l'effort exercé par la pression intérieur de la cabine, sur des butées correspondantes prévues sur le dormant. Généralement, ces éléments de butée sont fixes. On évite ainsi les vibrations subies par des éléments mobiles prévus dans d'autres systèmes, en réaction aux efforts de pression importante lors des vols.

Une telle porte est par exemple illustrée par le document FR-2 889 228. Sur la figure 3 de ce document, la porte présente quatre butées prévues sur le battant aux quatre coins de celle-ci et quatre autres butées correspondantes prévues sur le dormant. Lors des opérations de verrouillage et fermeture, un opérateur effectue un léger déplacement vertical du battant de sorte à faire glisser les butées de ce dernier derrière les butées correspondantes du dormant, c'est-à-dire du côté intérieur de l'aéronef. Ainsi, grâce à la pression interne de la cabine, les butées du battant viennent en appui sur la face intérieure des butées correspondantes. Les opérations de déverrouillage et ouverture sont symétriques afin de désaxer les butées du battant des butées du dormant, de sorte à permettre l'ouverture du battant vers l'extérieur de l'aéronef..

Un inconvénient des portes d'aéronef actuelles réside dans le fait que ces butées sont réparties de façon discrète sur les bords latéraux de l'ouverture. Ainsi, lorsqu'une butée se rompt, par exemple la butée en bas à droite de la porte du document FR-2 889 228, le battant de la porte n'est plus calé et est poussé par la pression intérieure de la cabine. Il en résulte une perte d'étanchéité de l'avion altérant la pressurisation intérieure, ainsi que des risques de détérioration du battant par les vibrations et efforts subis au niveau du fuselage.

On est alors amené à renforcer de telles butées, ce qui accroît de façon désavantageuse le poids de l'aéronef en un point précis du fuselage.

Aussi, on a pu prévoit des dispositifs de fermeture d'une porte d'aéronef procurant une sécurité accrue en cas de rupture d'une butée ainsi que des butées unitairement allégées.

A cet effet, le document DE 11 05 725, qui représente l'art antérieur le plus proche, décrit un dispositif de fermeture d'une porte d'aéronef comprenant un battant et un dormant lié au fuselage de l'aéronef et présentant une ouverture apte à recevoir ledit battant, ledit battant étant susceptible de prendre une première position dite fermée dans laquelle il obture ladite ouverture et une deuxième position dans laquelle il dégage l'ouverture (généralement le battant se retrouve, dans cette position, à l'extérieur à l'aéronef), le dispositif comprenant:
des moyens d'appui prévus sur ledit battant et des moyens d'appui correspondants prévus sur ledit dormant, lesdits moyens d'appui comprenant chacun respectivement une structure crénelée formée de créneaux et de crans, et lesdites deux structures crénelées étant agencées de sorte que les créneaux de l'une [structure crénelée] passent par les crans de l'autre [structure crénelée] lors du déplacement du battant de l'une desdites positions à l'autre, et de sorte que les créneaux de la structure du battant viennent s'appuyer, dans la position fermée, sur la face intérieure des créneaux correspondants de la structure du dormant.

On appelle ici "créneau" les parties pleines de la structure crénelée alors que les crans constituent les vides réguliers laissés entre ces créneaux.

Toutefois, la multiplication des créneaux nécessite une précision accrue dans le guidage relatif entre le battant et le dormant. Un jeu dans les systèmes de guidage existants peut entraîner un désaxement relatif des créneaux et une fermeture défaillante.

Dans ce contexte, la présente invention, telle que définie par les caractéristiques de la revendication 1, prévoit que le dispositif comprend des moyens de guidage portés par un créneau desdites structures et agencés pour guider lesdits moyens d'appui dudit battant du côté intérieur desdits moyens d'appui- correspondants dans le mouvement de fermeture de ladite porte.

On tolère ainsi un positionnement imparfait du battant par rapport au dormant, car le guidage assure que les moyens d'appui respectifs sont en quinconce lors du mouvement de fermeture faisant passer les moyens d'appui du battant derrière ceux du dormant, et vice et versa lors du mouvement d'ouverture. En faisant porter les moyens de guidage par un ou plusieurs créneaux d'une structure, on s'assure que les créneaux correspondants "passent" bien de l'autre côté de ladite structure, sans que ces créneaux correspondants viennent taper l'un dans l'autre empêchant la fermeture de la porte.

Afin d'optimiser la répartition des efforts d'appui au regard de l'étendue des structures crénelées, on prévoit que lesdites structures crénelées correspondantes ont sensiblement les mêmes dimensions de créneaux. Il en résulte effectivement un appui sur l'ensemble de la surface des créneaux en position fermée.

Cet agencement permet de prévoir un grand nombre de butées simples de fabrication sur une longueur prévue disponible tout en préservant la cinématique des portes "bouchon".

Par l'optimisation du nombre de butées réparties sur la longueur des côtés du battant, les efforts sont ainsi mieux répartis et les structures individuelles des butées s'en trouvent allégées, notamment dans leur épaisseur.

En particulier, lesdits créneaux et crans des structures sont sensiblement de même dimension, lesdits crans étant prévus pour laisser passer lesdits créneaux correspondants lors dudit déplacement. Par exemple les crans ont une dimension égale à 100 à 125% de la dimension des créneaux dans la direction générale des structures crénelées.

La séparation des butées par une distance sensiblement égale, notamment légèrement supérieure, à la dimension de ces butées assure le passage des butées "derrière" les butées correspondantes du dormant pour effectuer le déplacement vertical dans le mouvement de fermeture de la porte. Ainsi, la cinématique "bouchon" est bien conservée.

En pratique, les structures crénelées sont prévus sur au moins un côté, en général latéral, desdits dormant et battant.

Ainsi, dans un mode de réalisation, on prévoit que le battant et le dormant comprennent chacun deux structures crénelées sur deux côtés opposés, en particulier sur les côtés latéraux (extérieurs pour le battant, et intérieurs pour le dormant) par opposition aux côtés supérieur et inférieur de ceux-ci.

Selon un mode de réalisation particulièrement intéressant, lesdits moyens d'appui du battant d'une part et lesdits moyens d'appui correspondant dudit dormant d'autre part sont formés chacun d'une seule pièce monobloc crénelée. Les coûts de production et la solidité de l'ensemble sont alors garantis.

Dans un mode de réalisation, les moyens de guidage comprennent au moins un créneau de ladite structure du battant. Ce créneau a alors une double fonction (de butée et de glissière de guidage), diminuant dès lors le nombre d'éléments utilisés pour la structure du dispositif de fermeture.

En particulier, lesdits moyens de guidage comprennent un galet, monté mobile en rotation, traverse un desdits créneaux du battant au niveau d'une ouverture pratiquée dans ledit créneau du battant de sorte à rouler au moins en partie sur un créneau correspondant dudit dormant. Dans cette configuration particulière, les moyens d'appui ou créneaux correspondants du dormant ont également une double fonction (appui et guidage). Il est alors prévu que ledit créneau correspondant dudit dormant comprend au droit de ladite ouverture pratiquée, dans ladite position de porte fermée, un renfoncement apte à recevoir la partie du galet proéminente dudit créneau au niveau de ladite ouverture pratiquée. Il peut notamment s'agir d'un trou borgne ou traversant. Ce dernier permet au galet de ne plus glisser ou rouler sur le créneau officiant comme moyen d'appui. Ainsi, les créneaux sont, en position de porte fermée, en contact par friction assurant un maintien efficace.

On note que les créneaux des battant et dormant ont des fonctions symétriques. Ainsi, la position du galet peut notamment être inversée et ce dernier peut être porté par un créneau du dormant.

En particulier, lesdits créneaux correspondants comprennent chacun un patin de friction aptes à coopérer pour renforcer ledit maintient efficace.

Par ailleurs, ledit renfoncement est pratiqué uniquement dans l'épaisseur du patin de friction. On limite ainsi l'usinage des créneaux, lesquels se doivent d'être solides pour résister aux différences de pression entre l'intérieur et l'extérieur de l'avion.

Dans un mode de réalisation, ledit battant comprend des moyens d'appui additionnels agencés pour venir s'appuyer sur la face extérieure d'éléments d'appuis correspondants prévus sur ledit dormant, en particulier sur la face extérieure des moyens d'appui ou créneaux du dormant. Cette configuration s'applique en particulier lors d'une pression différentielle de cabine négative. Ainsi quelque soit le différentiel de pression entre l'intérieur et l'extérieur de l'aéronef, le battant de la porte est maintenu en appui sur le dormant, assurant une fermeture efficace de la porte.

En particulier, lesdits moyens d'appui additionnels sont formés d'un panneau de peau externe dudit battant. La peau joue ainsi un double rôle: enveloppe externe de l'avion vis-à-vis des perturbations et moyens de fermeture de la porte.

Selon une caractéristique de l'invention, le dispositif comprend des moyens d'étanchéité entre ledit battant et ledit dormant, ces moyens d'étanchéité définissant une zone pressurisée à l'intérieur dudit aéronef et une zone non pressurisée, lesdits créneaux étant prévus dans ladite zone non pressurisée. Ainsi, on prévoit que l'appui se fait au plus près de la peau du battant. La cavité entre la porte et le fuselage est alors réduite, de même que les nuisances sonores (ou bruit aérodynamique) en cabine dues par cette cavité.

Dans un mode de réalisation, ladite dimension desdits créneaux est sensiblement égale à la course verticale dudit battant dans son mouvement d'ouverture et de fermeture. Ainsi, un créneau du battant s'engage entre deux créneaux du dormant dans le mouvement de fermeture, puis la course verticale permet d'amener les créneaux du battant au droit des créneaux correspondants du dormant de sorte que l'appui se fasse sur toute la surface des ceux-ci.

En particulier, afin de réutiliser les mécanismes déjà développés à l'heure actuelle qui autorisent une course verticale de 55 mm, on prévoit que ladite dimension des créneaux dans ladite longueur (c'est-à-dire selon la direction générale de la structure crénelée) est comprise entre 48 et 54 mm; par exemple 50 mm, et ladite dimension des crans est comprise entre 56 et 62 mm, par exemple 60 mm. Des ratios similaires peuvent être appliqués pour toute autre valeur de course verticale.

Une tolérance dans la construction et l'alignement des moyens d'appui respectifs est obtenue lorsque ladite dimension des crans est comprise entre 100 et 125% de ladite dimension des créneaux, en particulier 120%.

Plusieurs modes de réalisation des moyens d'appui du dormant peuvent être prévus.

Notamment, on prévoit que lesdits créneaux du dormant sont formés par les extrémités de la peau du fuselage au niveau de ladite ouverture de porte. En utilisant un seul panneau officiant comme peau du fuselage et comme moyen d'appui du dormant, on simplifie le processus de montage de la porte.

En variante, lesdits créneaux du dormant sont formés par un panneau de rigidification rapporté sur la face interne de la peau du fuselage. Cette configuration propose ainsi une porte plus robuste car on limite les contraintes et les efforts directement appliqués sur la peau.

En variante toujours, lesdits créneaux du dormant sont rapportés, à l'aide de moyens de fixation amovibles, sur un cadre dudit fuselage prévu au niveau de ladite ouverture de porte. Ainsi, en cas de rupture d'un moyen d'appui, il est aisé d'en effectuer le changement. En outre, cette configuration admet une plus grande tolérance aux chocs, par exemple des passagers et leurs valises embarquant par la porte, par rapport aux réalisations où les chocs sont directement appliqués sur par la peau. En effet, ici les cadres du fuselage sont hautement plus résistants que la peau du fuselage.

De façon similaire, plusieurs modes de réalisation des moyens d'appui du battant peuvent être prévus.

Selon une configuration, on prévoit que ledit battant comprend une structure de porte portant une peau formant la surface extérieure et portant au moins un panneau latéral de battant de porte, lesdits créneaux du battant étant formés d'extrémités dudit panneau latéral de battant. On obtient ainsi un panneau monobloc permettant un montage rapide.

En variante, ledit battant comprend une structure de porte portant une peau formant la surface extérieure et portant au moins un panneau latéral de battant de porte, lesdits créneaux du battant étant formés d'au moins une pièce rapportée sur ledit panneau latéral de battant, ce qui autorise aisément des réparations par substitution d'une partie au moins des moyens d'appui du battant.

En particulier, une partie de l'espace formé entre lesdits créneaux du battant et ladite peau est comblée à l'aide d'un matériau de remplissage. On diminue ainsi la cavité susceptible d'engendrer des nuisances sonores pour la cabine.

L'invention vise également un aéronef comprenant au moins une porte munie d'un dispositif de fermeture tel que présenté ci-dessus.

De façon optionnelle, l'aéronef peut comprendre des moyens se rapportant aux caractéristiques de dispositif présentées ci-dessus.

D'autres particularités et avantages de l'invention apparaîtront encore dans la description ci-après, illustrée par les dessins ci-joints, dans lesquels :
- la **figure 1** représente une vue générale d'une porte d'aéronef comprenant un dispositif de fermeture selon la présente invention;
- **la** **figure 2** représente une vue latérale du battant de porte de la **figure 1**;
- la **figure 3** représente un détail du dispositif de fermeture de la **figure 1**;
- les **figures 4** à **7** illustrent différentes réalisations du dispositif de fermeture selon l'invention; et
- les **figures 8** à **11** illustrent des moyens de guidage utilisables dans l'une quelconque des réalisations des **figures 4** à **7**.

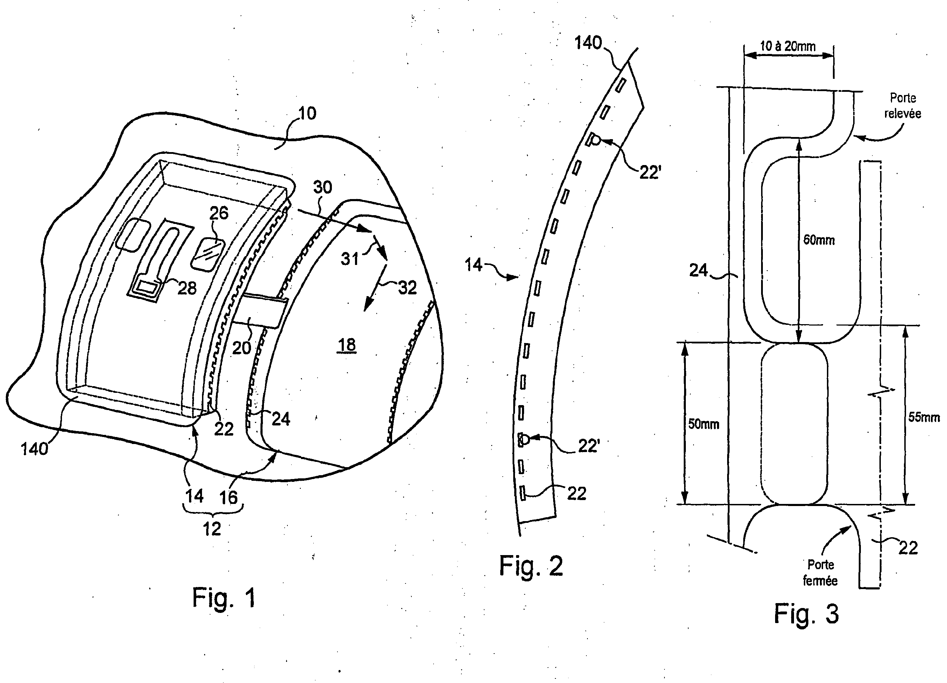

Sur la **figure 1**, on a représenté un fuselage 10 d'aéronef comportant une porte 12 en position "ouverte", prévue notamment pour l'entrée et la sortie de personnes à l'intérieur de l'aéronef.

Comme indiqué précédemment, la porte 12 comprend un battant 14 et un dormant 16 lié audit fuselage 10 et formant une ouverture 18, le battant 14 étant articulé par rapport au dormant 16 de sorte à obturer l'ouverture 18 ou à la dégager.

Le battant 14 de porte est formé d'une structure monocoque en matériau composites formant une seule pièce monolithique, la structure comportant au moins une peau externe 140 et un raidissement mono-directionnel ou multidirectionnel interne (non représenté), éventuellement une deuxième peau interne, l'ensemble constituant une structure caissonnée enfermant ou non des matériaux d'isolation thermique et acoustique. Une telle structure est obtenue par des techniques d'injection ou de diffusion de résine dans des pré-formes en fibres tissées placées dans des moules complexes, comportant un ou plusieurs noyaux extractibles ou solubles, afin de réaliser des structures caissonnées à double paroi par exemple.

En variante, la structure peut être de type sandwich comportant deux peaux sur une âme nid d'abeilles ou mousse.

Des mécanismes d'articulation 20, de verrouillage et déverrouillage sont prévus sur la porte 12 pour permettre son utilisation dans les deux positions dites ouverte et fermée.

Des structures crénelées 22, 24 sont illustrées ici comme une partie seulement des mécanismes de verrouillage et de déverrouillage. De façon classique, ces mécanismes peuvent comprendre en outre des arbres, des cames, des leviers, des guignols et autres embiellages. Comme on le verra par la suite, les structures crénelées 22, 24 contribuent au maintien de la- porte 12 en position fermée. De ce fait, le verrouillage de la porte est réalisé par des moyens complémentaires.

D'autres éléments équipent la porte 12, tels qu'un hublot 26, une poignée de commande 28 des moyens de verrouillage et de déverrouillage, ainsi qu'un toboggan ou toboggan-canot équipé et des mécanismes d'armement du toboggan et d'ouverture en secours motorisée généralement prévus dans la partie basse du battant 14.

Le présent exemple s'intéresse particulièrement aux structures crénelées 22, 24 de la porte 12 représentés, à titre d'exemple, sur la figure 1 par une structure crénelée disposée sur toute la longueur des côtés latéraux de la porte 12, Des structures crénelées correspondantes 22, 24 sont ainsi prévues respectivement sur le battant 14 et sur le dormant 16.

La porte 12 est ici de type "bouchon", c'est-à-dire qu'en position "fermée", le battant 14 est maintenu fermé contre le dormant 16 lié au fuselage grâce à la pression intérieure de la cabine d'aéronef.

Dans la cinématique de fermeture de la porte 12, le battant 14 est amené au regard de l'ouverture 18 selon un mouvement dans le plan horizontal (le sens longitudinal de l'avion), illustré par la flèche 30. Dans ce mouvement, les parties crénelées 22, 24 du battant 14 et du dormant 16 sont décalées en quinconce. Un mouvement selon la flèche 31 (perpendiculaire au plan du battant et du fuselage à cet endroit) amène le battant vers l'intérieur de l'aéronef, et en fin de course selon la flèche 31, les créneaux 22 du battant 14 "traversent" la partie crénelée 24 du dormant 16 pour se positionner du côté intérieur de la cabine par rapport à ceux du dormant. En variante, les mouvements selon les flèches 30 et 31 peuvent être combinés grâce à une cinématique appropriée des moyens d'articulation 20.

Une seconde phase de fermeture de la porte 12 est réalisée par le déplacement vertical du battant 14 (dans le plan de celui-ci selon la direction générale des structures crénelées) selon la flèche 32, typiquement de l'ordre de 55 mm, amenant, par glissement réciproque, les créneaux 22 du battant 14 au droit des créneaux correspondants 24 du dormant 16. Ainsi, en position de porte 12 "fermée", la partie crénelée 22 du battant 14 vient s'appuyer sur la face intérieure de la partie crénelée 24 du dormant 16 du fait de la pression interne de la cabine de l'aéronef.

L'opération d'ouverture de la porte 12 se réalise de façon symétrique avec une première phase visant à libérer les créneaux 22 des créneaux 24.

Au contraire des solutions connues de l'état de la technique proposant des butées discrètes, cette configuration crénelée 22 propose un profil de butées en créneaux "semi-continu", les interruptions (espaces inter-créneaux) étant uniquement nécessaires au passage des créneaux correspondants dans la cinématique de fermeture/ouverture de la porte. Mises à part ces interruptions nécessaires, la surface d'appui résultante (la somme des surfaces individuelles des créneaux) est alors maximale.

Sur la **figure 2**, on a représenté une vue latérale du battant 14 laissant apparaître le profil "semi-continu" des butées-créneaux 22. Ce dernier épouse la courbure de la peau externe 140 du battant 14.

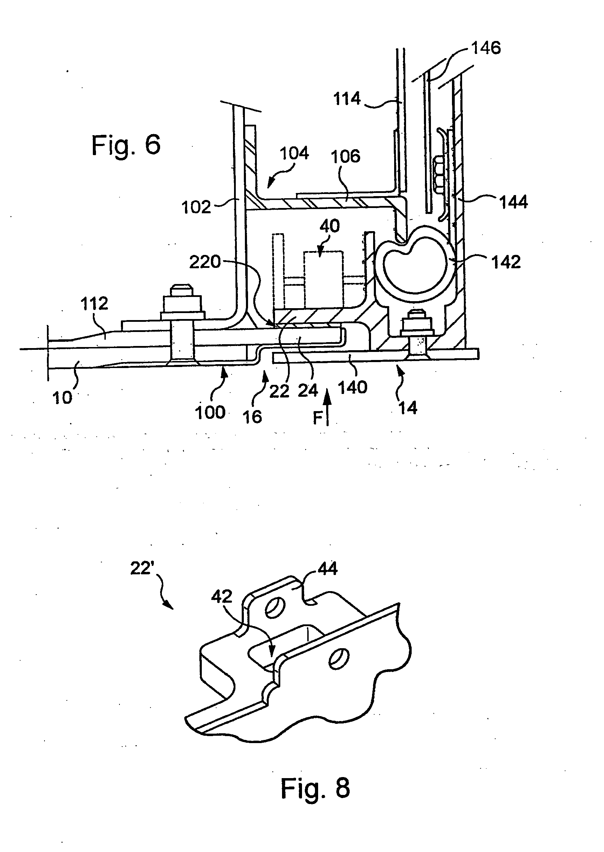

Deux butées 22', l'une sensiblement à l'extrémité haute du profil et l'autre sensiblement à l'extrémité basse du profil, prévues sur chaque côté du battant 14 sont munies de moyens de guidage, ici un galet comme illustré ci-après en lien avec les **figures 8** à **11**.

Sur la figure 3, on a représenté un détail des parties crénelées 22 et 24. La représentation du battant en trait continu correspondant à la position "fermée" alors que celle en trait discontinu correspondant à la porte déplacée selon la course verticale 32 de 55 mm de sorte que les parties crénelées 22 et 24 sont en quinconce.

Les butées crénelées 22 et 24 sont ici d'une seule pièce sur la hauteur de la porte 12.

Chaque créneau 22, 24 est sensiblement rectangulaire de plus grande dimension 50 mm dans la longueur de la structure crénelée, l'espace inter-créneaux étant quant à lui d'environ 60 mm. Ainsi, lorsque les créneaux sont en quinconce du fait de la course verticale 32, il résulte une tolérance de 5 mm de part et d'autre des créneaux pour permettre l'ouverture du battant par déplacement selon la flèche 30 malgré un positionnement relatif des structures 22 et 24 pas parfaitement en quinconce.

A titre d'exemple, une largeur de chevauchement des créneaux de 10 à 20 mm peut être prévue.

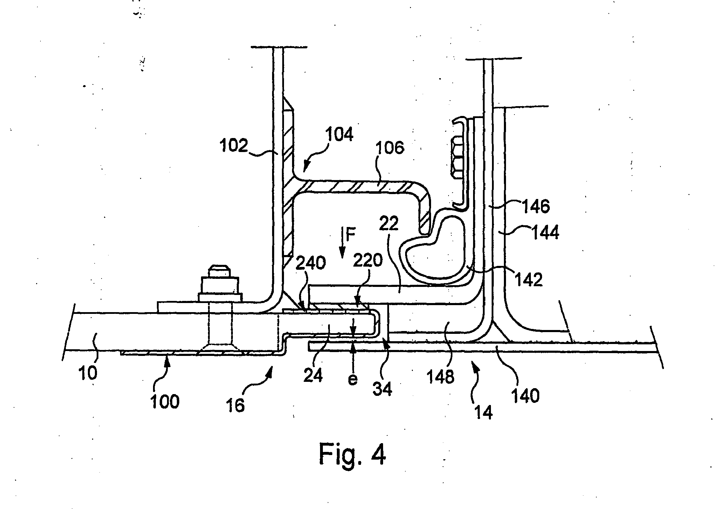

On va maintenant décrire plusieurs réalisations des moyens de créneaux 22 et 24 en lien avec les **figures 4** à **7**.

Quelque soit la réalisation concernée, des moyens d'étanchéité entre le battant 14 et le dormant 16 sont prévus, ces moyens d'étanchéité définissant une zone pressurisée à l'intérieur dudit aéronef, généralement la cabine, et une zone non pressurisée.

Ces réalisations présentent notamment des configurations où les butées 22 et 24 sont prévues dans la zone non pressurisée et une configuration où ces butées sont dans la zone pressurisée. D'une façon générale, les réalisations où ces butées crénelées sont extérieures à la zone pressurisée résultent de l'utilisation au moins partielle du revêtement du fuselage comme élément d'appui. Il est ainsi nécessaire de déporter le joint d'étanchéité, présentant pour être efficace une dimension certaine, vers l'intérieur de l'aéronef par rapport aux butées. De la mise à contribution du revêtement du fuselage comme élément d'appui, résulte une diminution du nombre d epièces et/ou de fixations à rapporter pour conférer les fonctions souhaitées.

D'une façon générale, les réalisations avec butées crénelées dans la zone pressurisée utilisent des butées crénelées rapportées sur le chant du dormant et du battant. L'espace entre le revêtement de fuselage et les butées rend plus facile l'intégration du joint d'étanchéité dans cette zone. Il en résulte une diminution du bruit aérodynamique par réduction de la cavité formant cette zone. Il en résulte également une réduction des risques de givrage des éléments de butées et d'appui en contact.

Sur la figure 4, on a représenté, en coupe horizontale, un détail de coopération entre les éléments de fermeture de l'invention au niveau de l'interface battant 14 / dormant 16. La coupe est représentée au niveau d'un couple de butées créneaux 22 et 24 dans la position de porte "fermée". En effet, les deux butées créneaux 22 et 24 sont en appui l'une sur l'autre du fait de l'effort F exercé par la pression interne de la cabine, assurant de la sorte le maintien en position fermée du battant 14.

Dans cette configuration, le dormant 16 est solidaire d'un panneau bloc composite de fuselage 10 formant la peau de ce dernier. Les butées créneaux 24 sont réalisés dans le corps même de ce panneau à l'extrémité de celui-ci, au niveau de l'ouverture 18. En détail, ces butées 24 sont d'épaisseur inférieur à la terminaison du panneau au niveau de l'ouverture 18 de sorte à ce que la peau 140 du battant 14 viennent dans la continuité de la surfaces extérieure du panneau 10 de fuselage.

On qualifie ici d"'intérieure" toute surface ou portion orientée vers la cabine de l'aéronef et d"'extérieure" ce qui est orienté vers l'extérieur de l'aéronef.

Une pièce d'encadrement en tôle fine 100 en alliage à base de titane ou acier inox est rapportée sur l'extrémité du panneau 10 et sur les butés 24 afin de protéger ceux-ci d'éventuels chocs pratiqués par.les passagers entrant ou sortant de l'aéronef..

La face intérieure des butées 24 est munie d'un patin de friction 240, ici en bronze, s'étendant sur toute la surface de la butée.

Le panneau 10 est fixé à un cadre composite 102 du fuselage par perçage et rivetage ou boulonnage. Le cadre 102 forme un chant de l'encadrement de la porte, ici le dormant.

Une pièce d'étanchéité 104 en métal, par exemple aluminium, est rapportée, par exemple par fixation mécanique (non représentée, afin de procéder aisément à un éventuel remplacement) sur toute la hauteur du cadre 102 et présente un bras 106 s'étendant également sur toute la hauteur de la pièce 104 et officiant comme appui-joint agencé pour coopérer avec des moyens d'étanchéité 142 correspondants prévus sur le battant de porte 14, ici un boudin caoutchouc déformable par le bras 106. L'habillage intérieur de la cabine (revêtement 114 représenté sur la figure 6) est généralement fixé à l'aplomb de l'extrémité libre du bras 106.

Ce boudin d'étanchéité 142, ici de diamètre 25,4 mm, est fixé de façon amovible, pour le changer aisément, sur toute la hauteur des côtés du battant 14.

Ce dernier 14 est constitué d'une structure de traverses 144 supportant la peau 140 sur la face extérieure de l'aéronef et un élément latéral de porte 146, également composite et rapporté par collage sur les traverses 144 au niveau du chant du battant. Cet élément latéral 146 de porte supporte généralement un revêtement intérieur de porte.

L'élément de structure crénelée 22 est ici composite et également rapportée sur l'élément latéral de porte 146 (ou élément de bord) entre le boudin d'étanchéité 142 et la peau 140 du battant 14. La face extérieure de chaque butée créneau 22 est munie, par collage ou autre fixation, d'un patin de friction 220, ici en bronze également qui lors du mouvement d'ouverture ou fermeture de la porte vient glisser sur le patin 240 du créneau 24 correspondant.

Les butées créneaux 22 ainsi constituées sont parallèles à la peau 140, cette dernière se prolongeant à même hauteur que l'extrémité libre des butées 22. Ainsi, ces éléments délimitent un espace 34 pour recevoir les butées 24 en position de porte "fermée", lequel espace présente une largeur sensiblement égale à l'épaisseur des butées 24. En particulier, on prévoit qu'un espace résiduel 'e' d'au moins 2 mm sépare la peau 140 de la butée 24 introduite dans l'espace 34.

Ainsi lors du déplacement selon la flèche 30, le battant 14 s'engage jusqu'à ce que les butées 24 se positionnent à hauteur de l'espace 34, puis par le déplacement selon la flèche 32, les patins 220 et 240 glissent l'un sur l'autre pour positionner les butées 22 et 24 au droit l'une de l'autre.

On note que le prolongement de la peau externe 140 à hauteur du dos des butées 24 permet un éventuel appui de l'extérieur sur les butées 24 en créneau du fuselage pour les cas de pression différentielle négative (pression externe supérieure à la pression interne régnant dans la cabine) ou les cas d'amerrissage (pression hydraulique externe).

En prévoyant les moyens de butées 22 et 24 aussi près de la peau du battant 14 et du fuselage, on amène les joints d'étanchéité 104, 106, 142 également à proximité de la peau; ce qui réduit la cavité existante entre la porte et le fuselage et contribue à diminuer les nuisances sonores en cabine.

En complément, l'espace 34 formé entre les butées 22 et la peau 140 du battant 14 peut être partiellement comblé par un matériau 148 composite rapporté de sorte à diminuer encore plus le volume de la cavité et donc les nuisances sonores. Ce complément de matière 148 accroît également l'inertie de la structure et donc la résistance aux efforts subis par la porte.

De préférence, la peau 140, l'élément de bord 146, le remplissage 148 et la structure crénelée 22 sont réalisés en carbone moulé intégral.

Ici le chevauchement des butées 22, 24 est de 18 mm de largeur ± 2 mm.

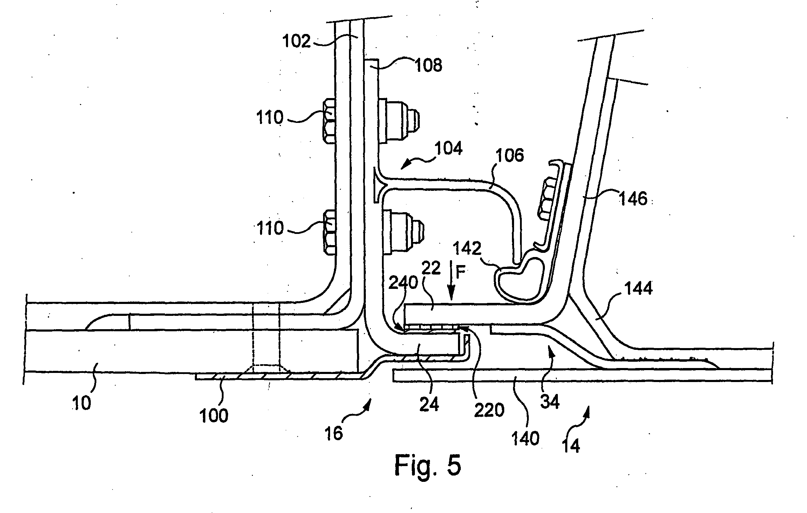

Sur la **figure 5**, on a représenté une autre réalisation de l'invention utilisant des références identiques de la **figure 4** pour de mêmes éléments.

Le système selon cette figure comprend des caractéristiques identiques à celui de la **figure 4**.

Néanmoins, dans cette réalisation, les butées 24 du dormant 16 ne sont plus portées par la peau 10 du fuselage.

On prévoit ici que les butées 24 forment une extrémité d'une pièce métallique 108 rapportée par fixation amovible 110 sur le chant du dormant, ici le cadre 102 du fuselage. Cette configuration permet notamment de procéder aisément au remplacement des butées 24 en cas de dégradation de celles-ci. En outre, cette pièce rapportée 108 est plus tolérante aux chocs que la peau 10 du fuselage.

En complément, cette même pièce 108 rapportée peut incorporer, dans la masse, l'élément d'étanchéité 104 et le bras 106 y afférant. En variante, cet élément d'étanchéité 104 peut être fixé de façon amovible soit à la pièce métallique 108, soit directement au cadre 102.

De façon indépendante, les butées 22 sont, quant à elles, prévues à l'extrémité de l'élément de bord 146, ce qui évite, dans le processus de fabrication de la structure du battant, de rapporter un élément supplémentaire.

De façon encore indépendante à ces éléments, cette configuration de la figure 5 prévoit une réalisation plus compacte des moyens de fermeture par butées "semi-continues".

Pour ce faire, les butées créneaux 22 et 24 sont de largeur réduite afin d'assurer un chevauchement, en position de porte "fermée", réduit à 16 mm. On peut ainsi utiliser un boudin d'étanchéité 142 de diamètre réduit à 18 mm.

La structure de battant 14 présente alors une forme trapézoïdale, les éléments de bords 146 se resserrant vers l'intérieur de l'aéronef de sorte que les moyens de fixation des joints 142 ne viennent pas toucher et endommager le bras 106 d'étanchéité.

Sur la **figure 6**, on a représenté encore un autre mode de réalisation de l'invention dans lequel les butées 22 et 24 sont toujours dans la zone non pressurisée.

Le système selon cette figure comprend des caractéristiques identiques à celui de la **figure 4**.

Néanmoins, le fuselage de J'aéronef comprend une pièce de renfort 112 disposée sur le pourtour de l'ouverture 18 et maintenue entre le cadre 102 et la peau 10 par des moyens de fixation classiques, ici des boulons. Cette structure est,ici, et non limitativement, métallique.

L'extrémité libre de la pièce de renfort 112 du côté de l'ouverture 18 est découpée de sorte à former la structure crénelée 24. On revêt si nécessaire chacune des butées 24 d'un patin en bronze 240.

Le battant 14 de composition hybride comprend une structure également métallique 144 sur laquelle repose, par fixation mécanique type boulons, le panneau de peau composite 140. Cette structure métallique est par exemple en aluminium usinée dans des profilés adaptés.

Les butées 22 sont prévues dans cette structure métallique, ce qui assure une rigidité importante du battant 14.

Comme représenté en traits discontinus, certaines butées 22' sont munies d'un galet 40 assurant des fonctions de guidage du battant 14 sur le dormant 16, comme on le verra par la suite.

Il est entendu que les structures 24 du dormant 16 présentées ci-dessus peuvent être combinées avec l'une quelconque des structures 22 du battant 14 ci-dessus, indépendamment de leur association explicite dans les exemples décrits ici.

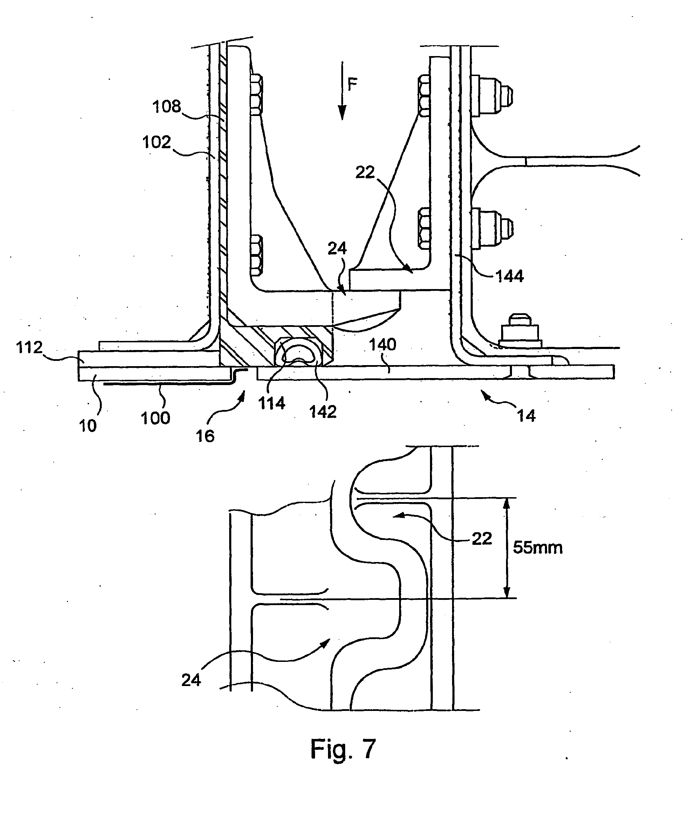

Sur la figure 7, on a représenté encore un autre mode de réalisation de l'invention disposant, cette fois-ci, les butées 22 et 24 dans la zone pressurisée de l'aéronef.

Le système selon cette figure comprend des - caractéristiques identiques à celui de la **figure 4**.

Néanmoins, le fuselage de l'aéronef est ici composite avec une peau en carbone 10 protégée à son extrémité libre sur l'ouverture 18 par une pièce d'encadrement en tôle-fine 100, un renfort 112 et un cadre 102 de fuselage également en carbone, ainsi qu'une pièce 108 en fibre de verre en forme de "L", le pied tourné vers l'intérieur de l'ouverture, et rapportée sur le cadre 102.

Le pied de cette pièce rapportée 108 est muni, sur sa face vers l'extérieur de l'aéronef, d'une rigole 114 apte à accueillir un joint caoutchouc d'étanchéité 142. En position de porte "fermée", la surface interne de l'extrémité libre de la peau 140 du battant 14 vient écraser ledit joint 142 de sorte à effectuer l'étanchéité souhaitée.

Dans la partie plus intérieure de la cabine, on rapporte sur les chants respectivement du dormant 16 et du battant 14, ici sur le cadre 102 du dormant 16 et sur une traverse 144 du battant 14, une pièce métallique crénelée 22 et 24. Ces deux pièces crénelées 22 et 24 coopèrent pour assurer la fonction d'appui évoquée précédemment.

Sur les figures 8 à 11, on a représenté un exemple de butée 22' prévue pour recevoir un galet de guidage 40, qui peut notamment s'appliquer à toutes les réalisations ci-dessus de butées créneaux.

Le créneau 22' est ici muni en son centre d'une ouverture traversante 42 au travers de laquelle passe le galet 40. Le galet 40 dépasse ainsi légèrement (d'environ 2 mm) de la surface externe du patin 220 prévu sous le créneau 22'.

Des moyens de fixation 44 du galet sont également prévus, notamment des platines verticales munies de trous pour recevoir un axe 46 supportant en rotation ledit galet 40.

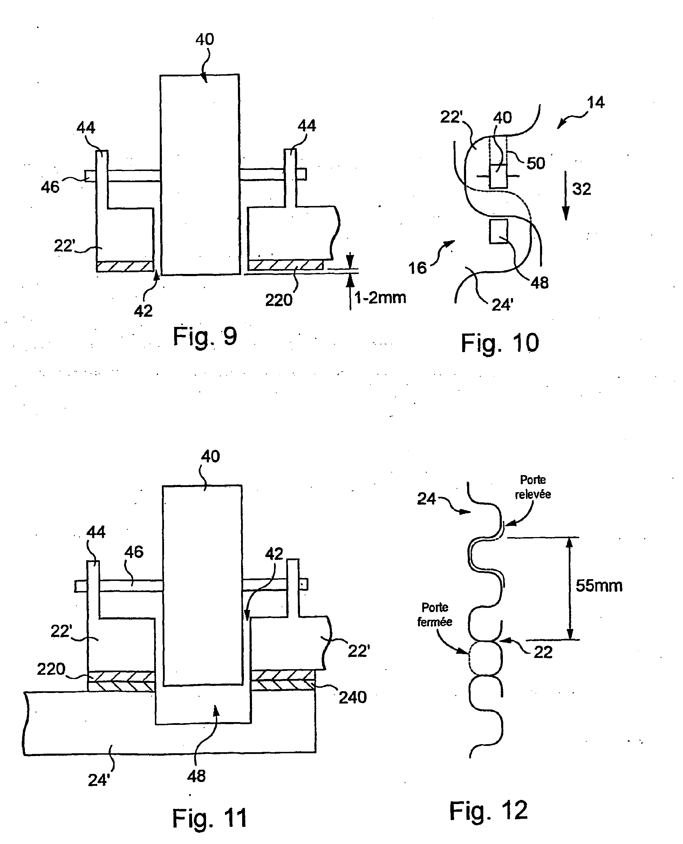

On prévoit, sur le dormant 16, un rail .50 sur lequel glisse ou roule ledit galet 40 dans la phase terminal de fermeture (fin du mouvement selon 30 et début du mouvement selon 32). Ce rail amène, lors du mouvement 32, le galet 40 à hauteur du créneau 24' correspondant au créneau 22 supportant le galet (figure 10).

La course 32 de descente du battant 14 se poursuit avec le galet 40 qui roule sur le patin de friction 240 de la butée 24' correspondante. Puis, la butée 24' étant munie en son centre (de façon symétrique à l'ouverture 42) d'un renfoncement 48, le galet 40 "tombe" dans ce renfoncement en fin de course 32 de sorte que les patins de friction 220 et 240 appuient l'un sur l'autre (figure 11).

Le mouvement de déverrouillage et d'ouverture de la porte réalise le trajet inverse pour le galet 40.

Sur la **figure 11**, on a représenté un trou borgne 48 pratiqué dans la butée 24'.

En variante, il peut être prévu un trou traversant. Cela permet d'utiliser des structures crénelées identiques 22' et 24'.

Dans une autre variante, le renfoncement 48 peut être uniquement pratiqué dans l'épaisseur du patin 240. Cette configuration est possible si le galet 40 ne dépasse du patin 220 que d'une épaisseur inférieure à celle du patin 240.

Une variante aux moyens de guidage de type galet prévu directement sur les butées 22 consiste à prévoir des moyens de guidage classiques, par glissière et galet par exemple, disposés en retrait des butées 22 et 24 vers l'intérieur de la cabine pour guider lesdits moyens d'appui dudit battant du côté intérieur desdits moyens d'appui correspondants dans le mouvement de fermeture de ladite porte.

Les éléments composites évoqués ci-dessus peuvent être de type carbone dans une matrice (ou résine armée de fibres de carbone dite PRFC ou selon la terminologie anglo-saxonne "*Carbon Fiber Reinforced Plastic*" CFRP), cette matrice étant thermodurcissable de type époxyde ou thermoplastique de type PEEK (polyéther éthercétone), PEKK (polyéther cétone cétone) ou PPS (poly sulfure de phénylène), le taux de fibres en applications aéronautiques étant supérieur ou égale à 50%.

Dans un mode de réalisation, on peut prévoir deux ou plus rangées de structures-crénelées par côté de porte, afin de diviser encore plus les efforts subis par chaque butée 22/24 et donc de diminuer le diménsionnement-structurel de celles-ci.

Les exemples qui précèdent ne sont que des modes de réalisation de l'invention qui ne s'y limite pas.

En particulier, un fuselage 10 et une structure de porte 12 de type classique avec une structure métallique peuvent être prévus en lieu et place de réalisations composites.

Egalement, on a prévu des butées 22, 24 sur les côtés latéraux de la porte puisque le mouvement de cette dernière comprend un déplacement vertical pour sa fermeture. Néanmoins, on peut prévoir que la fermeture de la porte 12 comprend un déplacement final horizontal et que les butées 22 et 24 sont prévues sur les parties supérieure et inférieure de la porte 12.

Par ailleurs, il peut être prévu des tailles de butées créneaux nettement inférieures à la course de relevage ou descente du battant 14 comme illustré sur la figure 12. Dans ce cas, lors de la course de relevage ou descente, une butée 22 vient "survoler", éventuellement par glissement, plusieurs butées correspondantes 24 avant d'atteindre la position de porte "fermée" (dans le sens de fermeture) ou avant que le battant 14 prennent une position en quinconce du dormant 16 pour effectuer le déplacement selon la flèche référencée 30 ci-dessus (dans le sens d'ouverture). On conserve néanmoins une surface de contact et d'appui identique.

Egalement, bien que la description ci-dessus évoque des structures crénelées monoblocs s'étendant sur toute la hauteur du côté de porte, il peut être prévu que plusieurs structures crénelées alignées sur le profil "semi-continu" soient utilisées. On peut également rapporter des créneaux individuels le long du profil de sorte à former un ensemble crénelé.

Egalement, un galet non monté mobile peut être utilisé pour réaliser les moyens de guidage, auquel cas il glisse sur les glissières et surfaces correspondantes. On peut en outre prévoir que le galet est monté sur une butée du dormant 16 et non plus du battant 14.

## Revendications

1. Porte d'aéronef avec un dispositif de fermeture comprenant un fuselage, un battant (14) et un dormant (16) apte à être lié au fuselage (10) de l'aéronef et présentant une ouverture (18) apte à recevoir ledit battant, ledit battant étant susceptible de prendre une première position dite fermée dans laquelle il obture ladite ouverture et une autre position dite ouverte dans laquelle il dégage l'ouverture,
le dispositif comprenant des moyens d'appui (22) prévus sur ledit battant (14) et des moyens d'appui (24) correspondants prévus sur ledit dormant (16), lesdits moyens d'appui ayant respectivement la forme d'une structure crénelée formée de créneaux et de crans,
lesdites deux structures crénelées (22, 24) étant agencées de sorte que les créneaux de l'une passent par les crans de l'autre lors du déplacement (31) du battant de l'une desdites positions à l'autre, et de sorte que les créneaux de la structure du battant viennent s'appuyer, dans la position fermée, sur la face intérieure des créneaux correspondants de la structure du dormant,
le dispositif étant **caractérisé en ce qu'**il comprend un galet de guidage (40, 42, 44, 46) porté par un créneau desdites structures et agencé pour guider lesdits moyens d'appui dudit battant du côté intérieur desdits moyens d'appui correspondants dans le mouvement de fermeture de ladite porte.

2. Porte d'aéronef avec un dispositif selon la revendication précédente, dans laquelle lesdites structures crénelées (22, 24) correspondantes ont sensiblement les mêmes dimensions de créneaux, et lesdits créneaux et crans des structures sont sensiblement de même dimension, lesdits crans étant prévus pour laisser passer lesdits créneaux correspondants lors dudit déplacement (31).

3. Porte d'aéronef avec un dispositif selon l'une des revendications précédentes, laquelle lequel lesdits moyens d'appui (22) du battant (14) d'une part et lesdits moyens d'appui (24) correspondants dudit dormant (16) d'autre part sont formés chacun d'une seule pièce monobloc crénelée.

4. Porte d'aéronef avec un dispositif selon l'une des revendications précédentes, dans laquelle le galet de guidage comprend un galet (40), monté mobile en rotation, traversant un desdits créneaux du battant au niveau d'une ouverture (42) pratiquée dans ledit créneau du battant de sorte à rouler au moins en partie sur un créneau (24) correspondant dudit dormant.

5. Porte d'aéronef avec un dispositif selon la revendication précédente, dans laquelle ledit créneau (24) correspondant dudit dormant (16) comprend au droit de ladite ouverture pratiquée (42), dans ladite position de porte fermée, un renfoncement (48) apte à recevoir la partie du galet proéminente dudit créneau au niveau de ladite ouverture pratiquée (42).

6. Porte d'aéronef avec un dispositif selon la revendication précédente, dans laquelle ledit renfoncement est un trou de sorte que, lorsqu'il reçoit ledit galet (40), lesdits créneaux correspondants (22', 24') sont, en position de porte fermée, en contact par friction.

7. Porte d'aéronef avec un dispositif selon l'une des revendications précédentes, dans laquelle ledit battant (14) comprend des moyens d'appui additionnels formés d'un panneau de peau externe (140) dudit battant et agencés pour venir s'appuyer sur la face extérieure des créneaux (24) du dormant (16).

8. Porte d'aéronef avec un dispositif selon l'une des revendications précédentes, comprenant des moyens d'étanchéité (104, 106, 142) entre ledit battant (14) et ledit dormant (16), ces moyens d'étanchéité définissant une zone pressurisée à l'intérieur dudit aéronef et une zone non pressurisée, lesdits créneaux (22, 24) étant prévus dans ladite zone non pressurisée.

9. Porte d'aéronef avec un dispositif selon l'une des revendications précédentes, dans laquelle ladite dimension des créneaux est sensiblement égale à la course verticale dudit battant dans son mouvement d'ouverture et de fermeture.

10. Aéronef comprenant au moins une porte munie d'un dispositif de fermeture selon l'une quelconque des revendications précédentes.

## Claims

1. Aircraft door with a closing device comprising a fuselage, a leaf (14) and a frame (16) that is adapted to be connected to the fuselage (10) of the aircraft and having an opening (18) adapted to receive the said leaf, the said leaf being able to assume a first position referred to as closed in which it obturates the said opening and another position referred to as open in which it leaves the opening clear,
the device comprising bearing means (22) provided on the said leaf (14) and corresponding bearing means (24) provided on the said frame (16), the said bearing means respectively having the form of a crenellated structure formed of crenels and indentations,
the said two crenellated structures (22, 24) being arranged so that the crenels of one pass by the indentations of the other during displacement (31) of the leaf from one of the said positions to the other, and so that the crenels of the structure of the leaf come to bear, in the closed position, on the interior face of the corresponding crenels of the structure of the frame,
the device being **characterized in that** it comprises a guide roller (40, 42, 44, 46) borne by a crenel of the said structures and arranged for guiding the said bearing means of the said leaf on the interior side of the said corresponding bearing means in the closing movement of the said door.

2. Aircraft door with a device according to the preceding claim, in which the said corresponding crenellated structures (22, 24) have substantially the same crenel sizes, and the said crenels and indentations of the structures are substantially of the same size, the said indentations being provided for allowing the said corresponding crenels to pass during the said displacement (31).

3. Aircraft door with a device according to one of the preceding claims, in which the said bearing means (22) of the leaf (14) and the said corresponding bearing means (24) of the said frame (16) are each formed respectively from a single crenellated integral piece.

4. Aircraft door with a device according to one of the preceding claims, in which the said guide roller comprises a rotatably mounted roller (40), passing through one of the said crenels of the leaf at an opening (42) made in the said crenel of the leaf so as to roll at least in part on a corresponding crenel (24) of the said frame.

5. Aircraft door with a device according to the preceding claim, in which the said corresponding crenel (24) of the said frame (16) comprises, facing the said opening made (42) in the said closed door position, a recess (48) able to receive the part of the roller protruding from the said crenel at the said opening made (42).

6. Aircraft door with a device according to the preceding claim, in which the said recess is a hole so that, when it receives the said roller (40), the said corresponding crenels (22', 24') are, in closed door position, in frictional contact.

7. Aircraft door with a device according to one of the preceding claims, in which the said leaf (14) comprises additional bearing means formed from an outer skin panel (140) of the said leaf and arranged to come to bear on the exterior face of the crenels (24) of the frame (16).

8. Aircraft door with a device according to one of the preceding claims, comprising sealing means (104, 106, 142) between the said leaf (14) and the said frame (16), these sealing means defining a pressurized zone inside the said aircraft and a non-pressurized zone, the said crenels (22, 24) being provided in the said non-pressurized zone.

9. Aircraft door with a device according to one of the preceding claims, in which the said size of the crenels is substantially equal to the vertical travel of the said leaf in its opening and closing movement.

10. Aircraft comprising at least one door provided with a closing device according to any one of the preceding claims

## Patentansprüche

1. Tür für ein Luftfahrzeug, das einen Rumpf aufweist, mit einer Schließvorrichtung, die einen Türflügel (14) und einen Türrahmen (16), der mit dem Rumpf (10) des Luftfahrzeugs verbunden sein kann und eine Öffnung (18) aufweist, die den Türflügel aufnehmen kann, umfasst, wobei der Türflügel eine erste so genannte geschlossene Stellung, in der er die Öffnung verschließt, und eine andere so genannte geöffnete Stellung, in der er die Öffnung freigibt, einnehmen kann,
wobei die Vorrichtung Abstützmittel (22), die an dem Türflügel (14) vorgesehen sind, und entsprechende Abstützmittel (24), die an dem Türrahmen (16) vorgesehen sind, umfasst, wobei die Abstützmittel jeweils die Form einer gezackten Struktur haben, die aus Zacken und Aussparungen gebildet ist,
wobei die zwei gezackten Strukturen (22, 24) in der Weise ausgebildet sind, dass die Zacken der einen sich durch die Aussparungen der anderen bewegen, wenn der Türflügel aus einer seiner Stellungen in die andere verlagert wird (31), und derart, dass sich die Zacken der Struktur des Türflügels in der geschlossenen Stellung an der Innenfläche der entsprechenden Zacken der Struktur des Türrahmens abstützen,
wobei die Vorrichtung **dadurch gekennzeichnet ist, dass** sie eine Führungsrolle (40, 42, 44, 46) umfasst, die von einer Zacke der Strukturen getragen wird und dazu ausgelegt ist, die Abstützmittel des Türflügels auf der Innenseite der entsprechenden Abstützmittel bei der Schließbewegung der Tür zu führen.

2. Luftfahrzeugtür mit einer Vorrichtung nach dem vorhergehenden Anspruch, in der die entsprechenden gezackten Strukturen (22, 24) im Wesentlichen die gleichen Zackenabmessungen haben und die Zacken und Aussparungen der Strukturen im Wesentlichen die gleiche Abmessung haben, wobei die Aussparungen vorgesehen sind, um die entsprechenden Zacken bei der Verlagerung (31) durchzulassen.

3. Luftfahrzeugtür mit einer Vorrichtung nach einem der vorhergehenden Ansprüche, in der die Abstützmittel (22) des Türflügels (14) einerseits und die entsprechenden Abstützmittel (24) des Türrahmens (16) andererseits jeweils aus einem einzigen gezackten Block gebildet sind.

4. Luftfahrzeugtür mit einer Vorrichtung nach einem der vorhergehenden Ansprüche, in der die Führungsrolle eine Rolle (40), die rotatorisch beweglich montiert ist, umfasst und durch eine der Zacken des Türflügels auf Höhe einer Öffnung (42), die in der Zacke des Türflügels ausgebildet ist, verläuft, derart, dass sie wenigstens teilweise auf einer entsprechenden Zacke (24) des Türrahmens rollt.

5. Luftfahrzeugtür mit einer Vorrichtung nach dem vorhergehenden Anspruch, in der die entsprechende Zacke (24) des Türrahmens (16) direkt unter der ausgebildeten Öffnung (42) in der geschlossenen Stellung der Tür eine Vertiefung (48) aufweist, die den vorstehenden Teil der Rolle der Zacke auf Höhe der ausgebildeten Öffnung (42) aufnehmen kann.

6. Luftfahrzeugtür mit einer Vorrichtung nach dem vorhergehenden Anspruch, in der die Vertiefung ein Loch ist, derart, dass, wenn es die Rolle (40) aufnimmt, die entsprechenden Zacken (22', 24') in der geschlossenen Stellung der Tür in einem Reibkontakt sind.

7. Luftfahrzeugtür mit einer Vorrichtung nach einem der vorhergehenden Ansprüche, in der der Türflügel (14) zusätzliche Abstützmittel umfasst, die aus einer Außenhautplatte (140) des Türflügels gebildet sind und dazu ausgelegt sind, sich an der Außenfläche der Zacken (24) des Türrahmens (16) abzustützen.

8. Luftfahrzeugtür mit einer Vorrichtung nach einem der vorhergehenden Ansprüche, die Dichtungsmittel (104, 106, 142) zwischen dem Türflügel (14) und dem Türrahmen (16) aufweist, wobei diese Dichtungsmittel eine mit Druck beaufschlagte Zone im Luftfahrzeug und eine nicht mit Druck beaufschlagte Zone definieren, wobei die Zacken (22, 24) in der nicht mit Druck beaufschlagten Zone vorgesehen sind.

9. Luftfahrzeugtür mit einer Vorrichtung nach einem der vorhergehenden Ansprüche, in der die Abmessung der Zacken im Wesentlichen gleich der vertikalen Bahn des Türflügels bei seiner Öffnungs- oder Schließbewegung ist.

10. Luftfahrzeug, das wenigstens eine Tür umfasst, die mit einer Schließvorrichtung nach einem der vorhergehenden Ansprüche versehen ist.
